# EUROPÄISCHE PATENTANMELDUNG

(11) **EP 1 854 771 A1**
(43) Veröffentlichungstag der Anmeldung: **14.11.2007**
(21) Anmeldenummer: 06113753.5
(22) Anmeldetag: 10.05.2006
(51) Int. Cl.: C04B 35/634

(54) **Verfahren zur Herstellung von keramischen Grünfolien mit acetalisierten Polyvinylalkoholen**

(71) Anmelder: Kuraray Europe GmbH, 65926 Frankfurt am Main (DE)
(72) Erfinder: Frank, Michael Kuraray Specialities Europe GmbH, 55129, Mainz (DE); Fuss, Robert, 65825, Liederbach (DE)
(74) Vertreter: Kisters, Michael Marcus

(57) **Zusammenfassung**

Die Erfindung betrifft die Verwendung von acetalisiertem Polyvinylalkohol mit hohem Rest-Polyvinylacetatgehalt zur Herstellung von keramischen Grünfolien, bzw. ein Verfahren zur Herstellung dieser Grünfolien.

## Beschreibung

Die vorliegende Erfindung betrifft die Verwendung von acetalisierten Polyvinylalkoholen zur Herstellung von keramischen Grünfolien bzw. ein Verfahren zur Herstellung dieser keramischen Grünfolien.

### Technisches Gebiet

Keramische Materialien für die Elektronikindustrie werden häufig durch Sintern einer sog. Grünfolie, d.h. einem folienartigen, dünnen Formkörper, der die keramischen Materialien enthält, produziert. Zur Herstellung dieser Grünfolien wird zunächst eine Suspension aus Metalloxiden und organischen Lösungsmitteln unter zur Hilfenahme von Weichmachern und Dispergierhilfen hergestellt. Diese Suspension wird anschließend mit einem geeigneten Verfahren (z.B. doctor blade process) in der gewünschten Dicke auf eine Trägerfolie aufgetragen und das Lösungsmittel entfernt. Die so erhaltene Grünfolie muss rissfrei sein, eine glatte Oberfläche aufweisen und noch eine gewisse Elastizität besitzen.

### Stand der Technik

Als Bindemittel bzw. Dispergiermittel zur Herstellung von keramischen Grünfolien werden häufig Fischöle, Polyacrylate oder bestimmte Polyvinylacetale wie Polyvinylbutyral verwendet. So beschreibt DE 4 003 198 A1 die Herstellung einer Gießmasse für keramische Grünfolien, wobei als Bindemittel Polyvinylbutyral mit einem Rest-Polyvinylacetatgehalt von 0 bis 2 Gew.% eingesetzt wird. Analog offenbart DE 3 724 108 A1 die Verwendung von Polyvinylbutyral, wobei der Rest-Polyvinylacetatgehalt bei 0,5 bis 3,0 Gew.% liegt.

Die hier beschriebenen Polyvinylbutyrale weisen allerdings eine geringe Dispergierfähigkeit auf und dienen als temporäres Bindemittel zur Gewährleistung der Flexibilität der gewünschten Grünfolie. So erhaltene Suspensionen weisen nur einen relativ geringen Feststoffanteil auf.

Aus einem anderen technischen Gebiet, der Herstellung von Druckfarben und Lacken ist die Verwendung von Polyvinylbutyral mit höherem Restacetatgehalt bekannt (DE 19 816 722 A1). Weiterhin offenbart DE 1 545 135 A1 die Verwendung von Polyvinylbutyral mit einem Restacetatgehalt von 8 % zur Herstellung von Dispersionen.

Die genannten Schriften beziehen sich auf die Dispergierung von organischen Pigmenten bzw. auf Dispersionen als solche und nicht auf die Herstellung von Suspensionen keramischer Pulver oder keramischer Grünfolien.

### Aufgabe

Aufgabe der vorliegenden Erfindung war es daher, Binde- oder Dispergiermittel zur Herstellung von Suspensionen für keramische Grünfolien bereit zustellen, die eine hohe Dispergierwirkung aufweisen und einen hohen Feststoffgehalt bei gleichzeitig niedriger Viskosität der Suspension gewährleisten.

Überraschenderweise wurde gefunden, dass Polyvinylacetale mit einem hohen Rest-Polyvinylacetatgehalt hervorragend als Binde- oder Dispergiermittel zur Herstellung von keramischen Suspensionen und damit zur Produktion von keramischen Grünfolien geeignet sind.

### Gegenstand der Erfindung

Gegenstand der vorliegenden Erfindung ist daher die Verwendung acetalisierter Polyvinylalkohole zur Herstellung von keramischen Grünfolien oder keramischen Formkörpern, wobei der acetalisierte Polyvinylalkohol einen Polyvinylacetatgehalt von 8 bis 50 Gew.% aufweist.

Die erfindungsgemäß verwendeten acetalisierten Polyvinylalkohole weisen bevorzugt einen Polyvinylacetatgehalt von 10 bis 50 Gew.%, besonders bevorzugt 10 bis 30 Gew.%, insbesondere 10 bis 20 Gew.% oder 14 bis 18 Gew.% auf.

Weiterhin können die acetalisierten Polyvinylalkohole einen Polyvinylalkoholgehalt von 10 bis 35 Gew.%, bevorzugt 11 bis 27 Gew.% und insbesondere 16 bis 21 Gew.% aufweisen.

Der Polymerisationsgrad der acetalisierten Polyvinylalkohole liegt bevorzugt zwischen 100 und 3000, besonders bevorzugt zwischen 100 bis 2000, insbesondere 200 bis 1500.

Bevorzugt weisen die verwendeten acetalisierten Polyvinylalkohole eine nach DIN 53015 (10 % Lösung in Ethanol bei 20 °C im Hoeppler-Viskosimeter) bestimmte Viskosität von 2 bis 500 mPas, besonders bevorzugt von 2 bis 200 mPas, insbesondere 2 bis 125 mPas oder 2 bis 75 mPas, auf.

Die erfindungsgemäß verwendeten, acetalisierten Polyvinylalkohole können vollständig oder teilweise acetalisiert eingesetzt werden, wobei der Einsatz von teilacetalisierten Polyvinylalkoholen mit einem Acetalisierungsgrad von 15 bis 80 Gew. %, insbesondere 20 bis 60 Gew. % bevorzugt ist. Der Acetalisierungsgrad der erfindungsgemäß verwendeten acetalisierten Polyvinylalkohole bestimmt sich aus der Differenz von 100 % zu Polyvinylacetatgehalt plus Polyvinylalkoholgehalt (jeweils in Gew.%)

Zur Acetalisierung der Polyvinylalkohole können ein oder mehrere Aldehyde der Gruppe Formaldehyd, Acetaldehyd, Propanal, Butanal, Isobutanal, Pentanal, Hexanal, Heptanal, Octanal, Nonanal, Isononanal oder Decanal eingesetzt werden. Bevorzugt wird Butanal zur Acetalisierung eingesetzt, so dass wiederum bevorzugt zur Herstellung der Grünfolie Polyvinylbutyral verwendet wird.

Die Herstellung des acetalisierten Polyvinylalkohols ist dem Fachmann im Prinzip bekannt und wird durch säurekatalysierte Acetalisierung eines entsprechenden Polyvinylalkohols durchgeführt. Insbesondere geeignet sind die in DE 19 816 722 A1 offenbarten Polyvinylbutyrale bzw. deren Herstellverfahren.

Zur Herstellung der erfindungsgemäß verwendbaren Polyvinylacetale bzw. Polyvinylbutyrale wird ausdrücklich auf diese Druckschrift verwiesen.

Weiterhin ist Gegenstand der Erfindung ein Verfahren zur Herstellung von keramischen Grünfolien oder keramischen Formkörpern durch Vergießen und Trocknen einer Suspension enthaltend anorganische Pigmente, organische Lösungsmittel, Bindemittel, Weichmacher und Dispergiermittel, wobei als Dispergiermittel ein acetalisierter Polyvinylalkohol mit einem Polyvinylacetatgehalt von 8 bis 50 Gew.% bzw. den anderen genannten Polyvinylacetatgehalten verwendet wird.

Bevorzugt enthalten die erfindungsgemäß hergestellten Suspensionen 0,1 bis 10 Gew.%, bevorzugt 1 bis 8 Gew.%, besonders bevorzugt 2 bis 6 Gew.%, insbesondere 0,1 bis 2 Gew.% des genannten, acetalisierten Polyvinylalkohols.

Zur Herstellung von keramischen Grünkörpern werden auf die o.g. Druckschriften verwiesen. In der Regel werden zunächst ein oder mehrere anorganische Pigmente, wie z.B. Al₂O₃, BaTiO₃, W-Oxide, ZrO₂, TiO₂ oder Aluminiumnitrit mit einem organischen Lösungsmittel wie z.B. Methanol, Toluol, MEK, Paraffine oder Isopropanol oder Mischungen aus diesen aufgeschlämmt. In diese Suspension wird nun ein Dispergator wie Fischöl und/oder die genannten acetalisierten Polyvinylalkohole zugegeben. Anschließend wird die Suspension mit einem oder mehreren Weichmachern versetzt und über mehrere Stunden homogenisiert.

Als Weichmacher werden bevorzugt Phthalate wie Dioctylphthalat, Dibutylphthalat oder Benzylbutylphthalat, Adipate, Polyethylenglykole, Phosphorsäureester, Zitronensäureester oder veresterte Polyethylenglykole wie 3G7 oder 3G8 eingesetzt.

Das erfindungsgemäße Verfahren kann zur Herstellung der Suspensionen somit die folgenden Schritte umfassen:
- Aufschlämmen eines anorganischen Materials (Pigments) in einem organischen Lösungsmittel
- Zugabe eines Dispergiermittels
- Optional: Aufschäumen des anorganischen Materials in einem Gemisch aus Lösungsmittel und Dispergiermittel
- Homogenisieren der Suspension
- Zugabe eines Weichmachers
- Zugabe eines Bindemittels, optional identisch mit dem Dispergiermittel
- Homogenisierung der Suspension

Die erfindungsgemäße Verwendung bzw. das erfindungsgemäße Verfahren erlauben den weitgehenden oder vollständigen Ersatz der üblicherweise als Dispergator verwendeten Materialien durch die genannten acetalisierten Polyvinylalkohole. Bevorzugt wird ein Dispergatorgemisch verwendet, das zu mindestens 50 Gew.%, insbesondere zu 75 % und ganz besonders zu 100 % aus dem genannten acetalisierten Polyvinylalkohol besteht.

Die in die Suspension eingearbeiteten polymeren Bindemittel bestehen z.B. aus Standard-Polyvinylbutyralen, Polyacrylaten und/oder den genannten acetalisierten Polyvinylalkoholen, jeweils alleine oder im Gemisch. Als Standard-Polyvinylbutyral sind z.B. die Typen Mowital B45H, B45M, B60 oder B75 der Kuraray Specialities Europe GmbH geeignet. Der Polyvinylacetatgehalt dieser Standard-Polyvinylbutyrale liegt bei 1 bis 4 Gew.%.

Es ist insbesondere möglich, ein Gemisch aus einem oder mehreren Standard-Polyvinylbutyralen und einem oder mehreren der genannten acetalisierten Polyvinylalkohole einzusetzen, wobei der Anteil der Standard-Polyvinylbutyrale unter 50 Gew.% (d.h. zwischen 0 und unter 50 Gew.%), bevorzugt unter 25 Gew.% (d.h. zwischen 0 und unter 25 Gew.%)und insbesondere zwischen ????(d.h. zwischen 0 und 10 Gew.%) liegt.

In einer Variante der vorliegenden Erfindung werden als Bindemittel nur die genannten acetalisierten Polyvinylalkohole und keine weiteren polymeren Bindemittel eingesetzt.

In einer weiteren Variante der vorliegenden Erfindung werden als Dispergator und als Bindemittel nur die genannten acetalisierten Polyvinylalkohole und keine weiteren polymeren Bindemittel oder Dispergatoren eingesetzt.

Die so erhaltene Suspension wird in geeigneten Mischern, wie z.B. Kugelmühlen, homogenisiert. Suspensionen, die unter Verwendung der acetalisierten Polyvinylalkohole hergestellt wurden, zeichnen sich durch eine besonders niedrige Viskosität bei ebenfalls niedrigen Dispergatorkonzentrationen aus. Dementsprechend können die Suspensionen hohe Feststoffanteile bei geringer Viskosität aufweisen, was die Verarbeitung der Suspension für keramische Grünfolien in kontinuierlichen Anlagen sehr erleichtert.

### Bestimmungsmethoden

### a) Bestimmung des Polyvinylacetatgehalts

Unter dem Polyvinylacetatgehalt wird der gewichtsprozentige Anteil an Acetylgruppen verstanden, der sich aus dem Verbrauch der für die Verseifung von 1 g Substanz notwendigen Menge Kalilauge ergibt.
Bestimmungsmethode (in Anlehnung an EN ISO 3681):
Etwa 2 g der zu untersuchenden Substanz werden in einem 500 ml Rundkolben auf 1 mg genau eingewogen und mit 90 ml Ethanol und 10 ml Benzylalkohol am Rückfluß gelöst. Nach dem Abkühlen wird die Lösung mit 0,01 n NaOH gegen Phenolphthalein neutral gestellt. Anschließend werden 25,0 ml 0,1 n KOH zugegeben und 1,5 Stunden am Rückfluß erhitzt. Man läßt den Kolben verschlossen abkühlen und titriert den Laugenüberschuß mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] = (b-a)*86/E, mit a = Verbrauch an 0,1 n KOH für Probe in ml, b = Verbrauch an 0,1 n KOH für Blindversuch in ml und E = Einwaage der zu untersuchenden Substanz trocken in g.

### b) Bestimmung des Polyvinylalkoholgruppengehalts

Der Polyvinylalkoholgruppengehalt (Polyvinylalkoholgehalt) ist der Anteil an Hydroxylgruppen, der durch die nachträgliche Acetylierung mit Essigsäureanhydrid nachweisbar ist.

### Bestimmungsmethode (in Anlehnung an DIN 53240):

Etwa 1 g Mowital wird in einem 300 ml Schliff-Erlenmeyerkolben auf 1 mg genau eingewogen, 10,0 ml Essigsäureanhydrid-Pyridin-Gemisch (23:77 V/V) zugefügt und 15-20 Stunden auf 50°C erwärmt. Nach dem Abkühlen kommen 17 ml 1,2-Dichlorethan hinzu und es wird kurzzeitig umgeschwenkt. Anschließend gibt man unter Rühren 8 ml Wasser zu, verschließt den Kolben mit einem Stopfen und rührt 10 Minuten. Kolbenhals und Stopfen werden mit 50 ml E-Wasser abgespült, mit 5 ml n-Butanol überschichtet und die freie Essigsäure mit 1 n Natronlauge gegen Phenolphthalein titriert. In gleicher Weise wird eine Blindprobe behandelt. Der Polyvinylalkoholgehalt berechnet sich wie folgt: Polyvinylalkoholgehalt [%] = (b-a) *440/E, mit a = Verbrauch an 1 n NaOH für Probe in ml, b = Verbrauch an 1 n NaOH für Blindprobe in ml, und E = Einwaage der zu untersuchenden Substanz trocken in g.

### c) Bestimmung der Viskosität

Die Viskosität der verwendeten Polyvinylacetale wird gemäß DIN 53015 an einer 10 %igen Lösung in Ethanol bei 20 °C im Hoeppler-Viskosimeter bestimmt.

### Beispiele:

### Vergleichsbeispiel 1

Eingesetztes Bindmittel: Mowital B45H (Kuraray Specialities Europe GmbH)

### Beispiel 1

Eingesetztes Bindmittel:
Polyvinylbutyral gemäß DE 19 816 722 A1 mit einem Polyvinylalkoholgehalt von 20.2 Gew.%, einem Polyvinylacetatgehalt von 16,1 % und einer im Hoeppler-Viskosimeter bestimmten Viskosität einer 10 %igen Lösung in Ethanol bei 20 °C gemäß DIN 53015 von 122,5 mPas.

**Weitere verwendete Materialien**

| Komponente | Beschreibung |
|---|---|
| Lösemittel | Azetropes Toluol-Ethanol-Gemisch |
| Dispergator | Menhaden Fishoil, Fa. Reichhold Inc., USA |
| Keramischer Füller | Tonerde A16-SG, Fa. Alcoa, USA Korngröße d₅₀: 0,35 µm Spezifische Oberfläche (BET): 6,6 m²/g |
| Plastifizierer | Alkyl (C7-C9) Benzyl Phthalat, Fa. Ferro |

### Bewertung der Suspensionseigenschaften

### a) Rheologisches Verhalten von Binderlösungen

Messverfahren: Für die Bestimmung der rheologischen Eigenschaften wurden von den jeweiligen PVB's 10 Masse%ige Lösungen im Lösemittelgemisch Ethanol/Toluol hergestellt und für 24h im Taumelmischer homogenisiert.

Die rheologische Charakterisierung erfolgte nach dem Kegel-Platte-Messprinzip (Kegeldurchmesser 50 mm, Öffnungswinkel 2°) mit dem Rotationsrheometer UDS 200 der Fa. Anton Paar (Österreich). Die Regelung des rotierenden Kegels erfolgt schubspannungsgesteuert, die Messtemperatur lag bei 20 °C. Die Viskosität wurde gegen die Schubspannung aufgetragen.

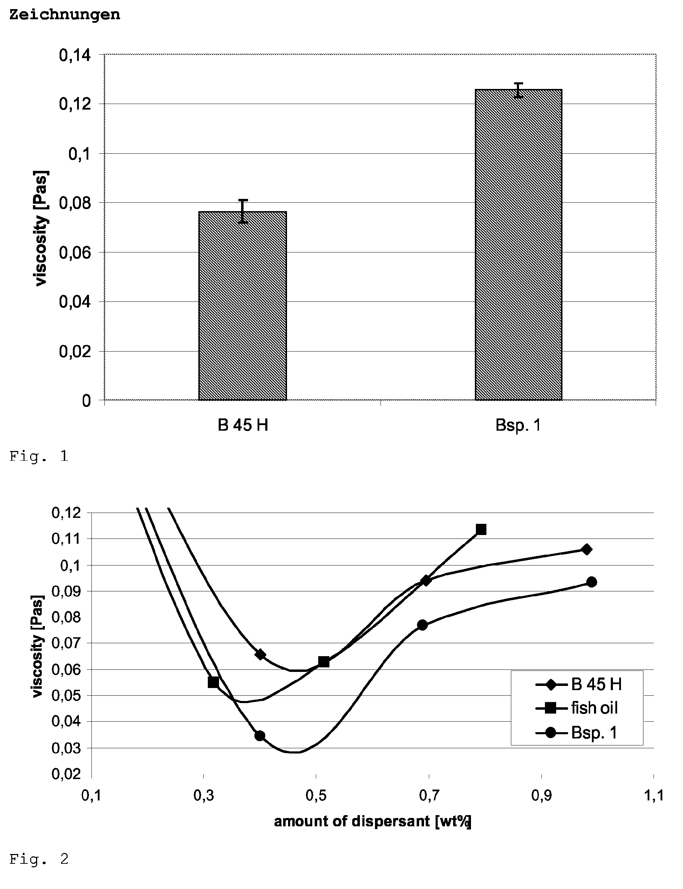

Ergebnisse und Bewertung: Fig. 1 zeigt die mittlere Viskosität der jeweiligen Binderlösungen bei einer Schubspannung von 20 Pa*s, wobei die Binderlösungen über den gesamten Messbereich eine konstante Viskosität aufwiesen (newtonsches Verhalten). Die Lösung mit B45H zeigte eine Viskosität im Bereich von 0,07 bis 0,08 Pa*s. Die Lösung des PVB mit hohem Polyvinylacetatgehalt gemäß Beispiel 1, zeigt eine Lösungsviskosität von 0,125 bzw. 0,123 Pa*s und liegt somit deutlich über dem Wert der Lösung B45H.

### b) Rheologie von PVB-Al₂O₃-Suspensionen

Messverfahren: Um die dispergierende Wirkung der PVB-Binder zu beurteilen, wurden verschiedene Al₂O₃-Suspensionen (40 Gew.% Ethanol/Toluol, 60 Gew.% Al₂O₃) aufbereitet. In diese wurden schrittweise der jeweilige PVB-Binder bzw. Dispergator zugegeben und mehrere Stunden homogenisiert. Bei der Herstellung der Folien wurde zunächst der Dispergator (in diesem Fall das PVB) im Lösungsmittel vorgelöst und dann das Pulver hinzugegeben. Die jeweilige Suspension wurde mittels Rotationsviskosimeter charakterisiert. Dabei wurde die Suspensionsviskosität bei einer Scherrate von 100 1/s als Vergleichswert herangezogen.

Ergebnisse und Bewertung: Fig. 2 zeigt die Viskositäten von verschiedenen Suspensionen in Abhängigkeit vom Feststoffgehalt der Suspension.

Der verwendete, neue PVB-Binder besitzt im Vergleich zu dem häufig als Dispergator verwendeten Fischöl eine verringerte Viskosität. Weiterhin findet man gegenüber Mowital B45H eine bessere dispergierende Wirkung, da die Viskositätswerte von entsprechend angesetzten Suspensionen unter denen der mit Mowital B45H angesetzten Suspensionen liegen.

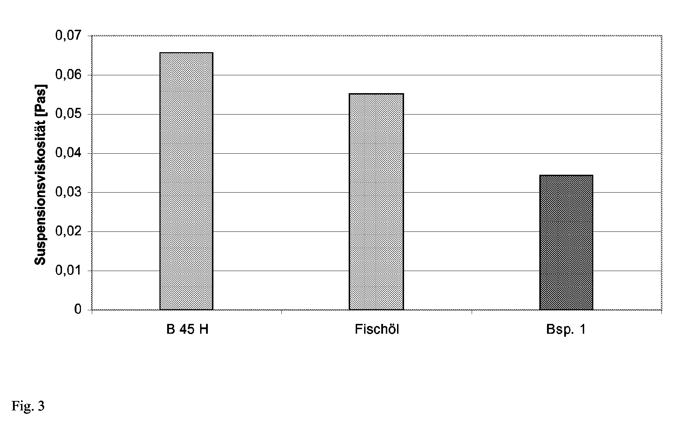

Einen Vergleich der dispergierenden Eigenschaften der untersuchten Dispergatoren zeigt Fig. 3. Je besser die Dispergierwirkung, desto niedriger ist die Viskosität der betreffenden Al₂O₃-Suspension. Eine deutlich dünnflüssigere und somit besser dispergierte Suspension wird bei Einsatz des PVB-Typs mit hohem Polyvinylacetatgehalt anstelle von B45H oder Fischöl erreicht.

### Herstellung von Grünfolien

Die so erhaltenen Suspensionen (Gießschlicker) wurden entgast und auf einer 4 m langen Foliengießanlage mit stehendem Doppelkammergießschuh nach dem Doctor-Blade-Verfahren vergossen. Als Gießunterlage kam eine siliconisierte PET-Folie (Dicke 100 µm) zum Einsatz. Die Folie wurde nach dem Gießen 48 h an Luft getrocknet (Temperatur = 22°C; Luftfeuchte = 65%) und anschließend abgezogen.

Die erhaltenen Folien ergaben eine Dicke von 200 µm und zeigten in der optischen Bewertung keinerlei Risse, Blasen oder Fehlstellen.

Die Dichte der gegossenen Al₂O₃-Folien wurde mittels Auftriebsmessung nach Archimedes bestimmt. Die Grünfoliendichten lagen alle in dem für das Foliengießen üblichen Bereich zwischen 60 und 70 Prozent der theoretischen Dichte.

Aus den jeweiligen Grünfolien wurden geeignete Zugproben in Form von sog. "Hundeknochen" gestanzt. Pro Folientyp wurden 10 Zugproben quer und 10 Proben parallel zur Gießrichtung gestanzt, um ein mögliches anisotropes Verhalten des Grünkörpers bestimmen zu können. Als Prüfmaschine kam eine Faserzugprüfanlage (Fafegraph ME, Fa. Textechno) zum Einsatz. Der maximale Messbereich lag bei 100 N, die Belastungsgeschwindigkeit betrug 10 mm/min. Gemessen wurde bei Raumtemperatur an Umgebungsluft.

Es wurden mit Grünfolien nach dem Stand der Technik vergleichbare Werte ermittelt, die auf keine signifikanten Eigenschaftsunterschiede der Erfindungsgemäß hergestellten Folien zu denen nach dem Stand der Technik hindeuten.

Der neue PVB-Typ ist damit als Dispergator und gleichzeitiges Bindemittel zur Herstellung keramischer Grünfolien geeignet. Vorteilhaft wird bei der Herstellung der Suspensionen eine verbesserte Dispergierwirkung und ein höherer Feststoffanteil erreicht und dementsprechend erhebliche anwendungstechnische Vorteile erzielt.

## Patentansprüche

1. Verwendung von acetalisierten Polyvinylalkoholen zur Herstellung von keramischen Grünfolien oder keramischen Formkörpern **dadurch gekennzeichnet, dass** der acetalisierte Polyvinylalkohol einen Polyvinylacetatgehalt von 8 bis 50 Gew.% aufweist.

2. Verwendung von acetalisierten Polyvinylalkoholen, **dadurch gekennzeichnet, dass** der acetalisierte Polyvinylalkohol einen Polyvinylalkoholgehalt von 10 bis 35 Gew.% aufweist.

3. Verwendung von acetalisierten Polyvinylalkoholen nach Anspruch 1 oder 2, **dadurch gekennzeichnet, dass** der acetalisierte Polyvinylalkohol einen Polymerisationsgrad von 100 bis 3000 aufweist.

4. Verwendung von acetalisierten Polyvinylalkoholen nach Anspruch 1 oder 2, **dadurch gekennzeichnet, dass** der acetalisierte Polyvinylalkohol eine nach DIN 53015 bestimmte Viskosität von 2 bis 500 mPas aufweist.

5. Verwendung von acetalisierten Polyvinylalkoholen nach Anspruch 1 bis 4, **dadurch gekennzeichnet, dass** zur Acetalisierung des Polyvinylalkohols ein oder mehrere Aldehyde der Gruppe Formaldehyd, Acetaldehyd, Propanal, Butanal, Isobutanal, Pentanal, Hexanal, Heptanal, Octanal, Nonanal, Isononanal oder Decanal eingesetzt werden.

6. Verwendung von acetalisierten Polyvinylalkoholen nach Anspruch 1 bis 5, **dadurch gekennzeichnet, dass** als acetalisierter Polyvinylalkohol Polyvinylbutyral eingesetzt wird.

7. Verfahren zur Herstellung von keramischen Grünfolien oder keramischen Formkörpern durch Vergießen und Trocknen einer Suspension enthaltend anorganische Pigmente, organische Lösungsmittel, Bindemittel, Weichmacher und Dispergiermittel, **dadurch gekennzeichnet, dass** als Dispergiermittel ein acetalisierter Polyvinylalkohol mit einem Polyvinylacetatgehalt von 8 bis 50 Gew. verwendet wird.

8. Verfahren zur Herstellung von keramischen Grünfolien- oder -formkörpern nach Anspruch 7, **dadurch gekennzeichnet, dass** die Suspension 0,1 bis 10 Gew. % des acetalisierten Polyvinylalkohols enthält.
